# EUROPEAN PATENT SPECIFICATION

(11) **EP 0 669 384 B1**
(45) Date of publication and mention of the grant of the patent: **05.06.2002**
(21) Application number: 95101674.0
(22) Date of filing: 08.02.1995
(51) Int. Cl.: C09D 179/08, C09D 127/18

(54) **Process for obtaining water paints having a low content in volatile substances for the antiadhesive coating of aluminium pots**
Verfahren zur Herstellung von Wasserfarbstoff mit geringem Gehalt an flüchtigen stoffen für Antihaftschichtbeschichtung von Aluminiumtopfen
Procédé de production de peinture à l'eau ayant une petite quantité de substances volatiles pour revêtement anti-adhésif de pots en aluminium

(30) Priority: 24.02.1994 IT MI940336
(43) Date of publication of application: 30.08.1995
(73) Proprietor: Akzo Nobel Non Stick Coatings S.r.l., Fombio (Lodi) (IT)
(72) Inventor: Bignami, Claudio, I-20071 Casalpusterlengo (Milan) (IT)
(74) Representative: Gervasi, Gemma, Dr.

(56) References cited:
- EP-A- 0 549 361
- WO-A-92/10549
- US-A- 4 087 394
- PATENT ABSTRACTS OF JAPAN vol. 18, no. 140 (C-1177) (6480) 8 March 1994 & JP-A-05 320 340 (FUJIKURALTD) 3 December 1993

## Description

### Field of the invention

The present invention refers to a process for obtaining water paints having a low content in volatile substances for the anti-adhesive coating of alluminium pots.

Particularly are obtained painting compositions constituted by aqueous dispersions of mixtures of fluorinated polymers and polyamideimides (PAI) partially salified with aliphatic amines, pigments and surface-active agents, such painting compositions having a content in volatile substances equal or inferior to the value laid down by the EEC guidelines N° 80/779, 82/884, 84/360 and 85/203 (see also italian D.P.R. 203 of May 24, 1988), referring to the purity of the air and to the pollution reduction caused by industrial plants.

In the present description the word "pot" refers to pots, their covers, pans, baking-pans, baking-trays, toasting-grill or oven-grill, kitchenware, spatulas, ladles and all other working tools which are commonly used for the preparation and cooking of foods.

### State of the art

Gaseous emissions from industrial plants are more and more carefully controlled by the organisms in charge of the environmental protection and public health, therefore regulations are issued in order to reduce as much as possible such emissions.

In the field of industrial painting, regulations were issued defining the maximum of volatile substances (SOV) which can be contained in the compositions used; therefore all painting compositions in use before the issuing of such regulations had to be reconsidered.

The use in cooking of anti-adhesive pots greatly developed in the last thirty years. As a consequence painting compositions which are useful for obtaining the wanted anti-adhesive propeties of the pots in respect to the food cooked in them and also the methods for applying such compositions on the surfaces of the pot coming into contact with the cooked food, were and are still studied.

Various are the materials for producing cooking pots but with regard to anti-adhesive pots alluminium is the most commonly used.

Among the anti-adhesive water paints particularly interesting are those containing polyfluorinated polymers (PTFE).

These polymers are insoluble in water and are normally used as aqueous dispersions.

In order to improve the adhesiveness of these polymers to the metallic substrate on which they are applied, other compositions wherein other compounds are present and also new methods for treating the metallic surface before the coating have been studied.

For example, the Italian Patent 1,226,347 in the name of the Applicant describes a pickling process particularly suitable to prepare an alluminium surface for fixing an anti-adhesive paint.

Among the compounds mixed with PTFE in order to improve the fixing of the paint to the metallic substrate polyqamidesimides (PAI) were particularly studied since they form strong films very resistent chemically and thermally.

The PAI were used as film-forming substances in combination with PTFE, and were used as organic solvents solutions as described in GB-A-1,228,438.

Unfortunately the PAI are poorly resistent to water i.e. when in a aqueous medium (as for example PTFE dispersions) or simply in the presence of air humidity, they hydrolyse changing their molecular structure.

In the technique various methods were studied in order to improve the water stability of PAI as described for example in GB-A-1,207,577 wherein PAI are salified with amines, particularly tertiary-amines or in the Abstract of JP-A-05 320 340, wherein the PAI are salified with a small amount (1-5%) of a fluororesin to obtain a PAI useful for varnish.

In USA-4,014,834 it is described the stabilization of PAI by salification and contemporary solution in water in the presence of viscosity reducing agents (furfurilic alcohol) and of the solvents commonly used (N-methylpyrrolidone) and thereafter mixing them with the PTFE dispersions in order to obtain formulations having high adhesiveness on metallic substrates.

Unfortunately the formulations according to US-A-4,014,834 have a content of volatile substances (SOV) largely higher than the quantity allowed by the above mentioned DPR 203 of 24/05/88.

Analogously, the WO-A-92 10549 discloses the use of particular mixtures of PAI or of PPS with a perfluorocarbon resin comprising at least two different polytetrafluoroethylene resins having very different viscosities useful for solving the problem of application of the aqueous coatings on smooth metallic surfaces but without solving the problem of lowering the content of volatile organic substances (SOV) in the paint.

As a consequence, the post-burning apparatus required by the law for the elimination of the substances polluting the gaseous emission of the painting plants must be adapted accordingly with heavy costs for the industry.

In DPR 203 the polluting substances are subdivided in classes; the lower is the class, the higher is the toxic potential of the substance. Amines utilized in the salification of the PAI are comprised among the products of the lowest class having a strong and disagreable smell, irritating already in a concentration of 8 ppm, which then require the depollution of the environment because while the highboiling solvent (furfurilic alcohol, N-methyl-pirrolidone) evaporate almost completely in the essication-oven, the amines utilized for the salification immediately start to pollute the environment so that it is necessary to depollute the working environment as soon as the materials are applied to the substrate. Therefore, it is necessary to treat in the post-burning apparatus for the emissions not only the air coming from the essication-ovens but also the air coming from the application cabins which is three - six times (in volume) more than the air coming from the ovens.

According to the known technique, the use of aqueous solutions of PAI in the field of water paint based on PTFE is strongly limited by the huge quantity of co-solvents and neutralising bases necessary to solubilize and stabilize the PAI in water, which brings in the final water paint a huge quantity of organic volatile substances (SOV), particularly when it is considered that the PAI are commercially available as solutions in N-methylpyrrolidone having a PAI concentration of 30 - 44% by weight.

Considering that the PAI have excellent film-forming properties and gave good finishing effects when associated with PTFE, it is evident the interest in new formulations which allow the use of PAI and PTFE reducing the quantity of volatile solvents associated with their use as presently described in the state of the art without exceeding the SOV-values permitted by the law.

In co-pending European patent pubblication No. 0607934 the Applicant already described some formulations of water paints containing PTFE, PPS and PAI which can be applied on alluminium disks from which grease was removed before they were formed into pots. The advantage of such formulations is that they can be applied by simple rolling and therefore it is avoided the problem of treating the air of the application cabins as it is the case in which the spray-technique is applied.

The present changes in the pollution regulations and the development of more and more sophisticated analytical techniques to detect the presence and origin of substances in the working environments and more generally in the air, force the industry to prepare new formulations having finishing properties equal to or better than those already obtainable with the known formulations commercially available wherein said new formulations at the same time time minimize the pollution problems.

The works and studies of the Applicant aim at the improvement of water paints containing PFTE of his own production.

### Technical problem

The use of the PAI in water paints containing PTFE is strongly limited by the problem of improving the PAI solubility in water in order to obtain water paints having a good quantity of "dry" (more than 50% in weight) and at the same time a content in volatile substance lower than the one requested by DPR 203.

As above said, the solutions to this problem proposed up to now were to salify the PAI with amines using considerable quantities of organic solvents soluble also in water in order to help the homogenisation with the PTFE suspensions since it is well known that if the PAI solutions in N-methylpyrrolidone are mixed directly with the PTFE dispersions the colloidal breaking takes place, i.e. the PTFE dispersion becomes unstable and lumps form.

### Detailed description of the invention

Thanks to his search and study the Applicant has found the process defined in the claims.

Water paints having a low content in volatile substances, suitable for the anti-adhesive coating of alluminium pots, are aqueous dispersions of PAI and PTFE mixtures characterised in that they have a PAI content comprised between 10% and 30% by weight and the ratio PAI:PTFE is comprised between 35:65 and 80:20 weight/weight, such PAI being partially salified with an aliphatic amine before the mixture with the aqueous dispersion of PTFE.

In particular, such partially salified PAI are obtained by treating a solution of PAI in N-methylpyrrolidone with an amount of aliphatic amine of 55% - 65% by weight calculated on the stoichiometric quantity necessary for the total salification of the free acid groups of the PAI.

Preferably the commercially available PAI solutions are used having a PAI content, in N-methylpyrrolidone, of 25% - 45% by weight.

It was surprisingly found that partially salified PAI can be mixed with the aqueous dispersions of PTFE without adding co-solvents (glycols. glycolethers) and using reduced quantities of "mild" surface-active agents. This result is very interesting when considering that, according to the known techniques, it is impossibile to mix totally salified PAI with the PTFE dispersions (colloidal breaking) also when a ratio PAI:PTFE (20:80) is maintained. It is because of this problem that in the known technique co-solvents and stabilising surface-active agents (polyethoxylated alkylphenols) are used causing the increasing of the SOV of the final paint.

It is therefore the main aspect of the present invention the method defined in claim 1 for partially salifying a PAI solution in N-methylpyrrolidone with a PAI content of 25% - 45%, comprising the following steps:
a) charging the above said PAI solution in the reactor in nitrogen atmosphere;
b) regulation of the solution temperature between 25° - 35°C and addition in the reactor of the amine preferred for the salification in an amount comprised between the 45% - 65% of the stoichiometric quantity necessary for neutralising the PAI, increasing temperature to 50°C and adding a non-ionic surface active agent in an amount comprised between 10% and 20% by weight calculated on the PAI and water in an amount comprised between 40% and 50% by weight calculated on the PAI;
c) maintaining the reaction mixture at a temperature of 90° - 110°C for 4 - 10 hours.

Suitable for the preparation of the partially salified PAI according to the invention are aliphatic tertiary amines; among these methyl-diethylamine, tri-ethylamine, di-methyl-ethanolamine and di-ethyl-ethanolamine are preferred.

Among the "mild" non-ionic surface active agents useful for the invention the following can be considered as suitable examples: aliphatic alcohols with 10 - 30 carbon atoms condensed with 10 - 20 mol of ethylene oxide per molecule.

Using the partially salified PAI according to the invention it is possible to obtain water paints having a SOV value in accordance with the requirements of the above said DPR 203.

The mixing of the partially salified PAI solution and the aqueous dispersion of PTFE is easy and does not involve colloid breakage.

Surprisingly, once mixed with PTFE dispersions in order to obtain the water paints useful for the anti-adhesive coating of pots, the PAI partially salified with amines, will not cause the formation of layers once the paint is applied, as reported by the prior art in the case of PAI totally salified. Therefore, the coatings obtained with these water paints are homogeneous, without visible migration of the film-forming substance (PAI) towards the metal surface and of the anti-adhesive (PTFE) towards the exterior.

Because of the absence of formation of layers during the drying process of the paint, it is necessary to strongly increase the amount of PAI inrespect of PTFE in the paint in order to obtain an adhesiveness of the paint to the metallic substrate comparable to the one obtained with layer-forming paints.

In particular it was found that it is necessary to have a ratio PAI:PTFE in the paint higher than 50:50, preferably higher than 60:40 weight/weight (dry).

Above these ratios the paint film shows a good adhesiveness to the metallic substrate since the PTFE particles are totally inglobed in the PAI film. The presence of PTFE in the film is not sufficient to impart anti-adhesive properties to the film, therefore, the paints according to the invention are used as first coating-layer on a metallic substrate and are followed, after drying, by a second layer of water paint having a higher content of PTFE and a lower content, or absence, of PAI.

Anyhow, it was observed that water paints having a PAI:PTFE ratio lower then 50:50 weight/weight, also when a PAI totally salified with amine is used and coalescence-agents are added to the PAI solution, give films showing layers and a good adhesiveness to the substrate but presenting lumps and therefore not suitable for the coating of pots.

In a preferred form of the present invention the ratio PAI:PTFE is comprised between 60:40 and 70:30.

The anti-adhesive water paint containing essentially PTFE and partially salified PAI as above described are particularly interesting because the coatings obtained with them are very homogeneous, are quickly dry and, after drying and termical teatment, give coatings exceptionally hard and resistant.

Another interesting property of the water paints containing essentially PTFE obtained using the partially salified PAI according to the invention is represented by the fact that the surface-active agents containing essentially polyethoxylated alcohols used for their preparation decompose at the paint-cooking temperature thus liberating the ether-moiety of the molecule as a gas and leaving no unwanted residue of the aromatic-type or others which could be extracted from the coating.

If the partially salified PAI obtained by the process of the invention are used for replacing the totally salified PAI in the water paints described in the co-pending Italian Application N° MI93A002740 in the name of the Applicant, these latter present a SOV value which falls inside the limit fixed by the above said DPR 203 or, at least, requires the post-burning treatment only for the air coming from the drying oven without treating all the air of the painting plant in view of its reduced content of solvents and volatile compounds.

The water paints obtained by the process of the invention are useful for the formation of a first paint-film directly on the metallic surface of the substrate, especially alluminium, previously pickled and sanded, using the normal spray techniques.

Particularly interesting results are obtained in the coating of aluminum dishes to be by using the formulations based on the products of the process of the present invention through a rolling process with one or more layers spaced out by a drying process at 50-70 °C, on aluminium discs previously degreased but non-pickled as disclosed in the previous EP-A-94100688 of the Applicant.

In this case, the first and the second layer are obtained by using the formulations of aqueous paints related to the present invention for both the first and the second layer but by changing the content of PAI.

Thus a product having a higher content of PAI and a high adhesion power is used as primary element to apply on the aluminium substrate while a product having a lower content of PAI, less adhesion power to the metal support and a higher anti-adhesion power than the previous product is used as secondary element to apply afterwardly on the first layer of paint.

THe second layer, after drying, is covered with a third layer of an aqueous PTFE paint which does not contain PAI.

In these types of uses, the ratio PAI:PTFE in the second layer is preferably maintained in the range of from 35:65 to 45:55 weight by weight while in the first layer is from 50:50 to 80:20.

The coatings obtained with the water paints obtained in the process of the invention present a reduced value of SOV during their application and are particularly resistant against migration of the PTFE contained in the paints used for the coating layers following the first without decreasing the fixation of the external paint layer.

The following examples will better illustrate the process of claim 1.

The water paints used in the tests were prepared using commercially available compounds identified as:
- Algoflon D 60, registered trademark of Montefluos SpA, (PTFE aqueous dispersions);
- Printex 85 of Degussa (carbon-black);
- Resistherm, registered trademark of Bayer SpA (solutions of PAI in N-methylpyrrolidone);
- Rhodeftal, registered trademark of Rhone Poulenc (solutions of PAI in N-methylpyrrolidone);
- Collacral, registered trademark of BASF (urethane of a ethoxylated fat alcohol).

### Examples 1 - 9

727 g of Rhesisterm in N-methylpyrrolidone (44% by weight) were charged under nitrogen atmosphere in autoclave equipped with stirrer and warming sleeve. The temperature of the solution was raised to 30°C and 76 g of trimethylamine (50% of the stoichiometric quantity necessary to neutralize the PAI) were added. After the addition of the amine the temperature of the solution was raised to 50°C and 54 g of polyethoxylated tridecylic acid (10 molecules of ethylene oxide per mole) were added. The temperature of the mixture was raised to 100°C and 143 g of distilled water were added in the autoclave. The temperature was maintained to 100°C for 6 hours and then it was cooled down to room temperature and the autoclave content, a clear solution of partially salified PAI, was discharged.

651 g of the so obtained PAI solution were mixed with 149 g of Algoflon D 60 (an aqueous dispersion of 60% PTFE containing 3.5% of surface-active agents) and 200 g of distilled water, under mild stirring at room temperature (25°C). An homogeneous dispersion of clear water paint having a dry content (PAI + PTFE) 29.8% by weight and a weight ratio PAI:PTFE of 70:30, was obtained.

The total value of organic volatile substance (SOV) of the obtained paint was 355 wherein 49.5 of class 1 and 305.5 of class 2, according to the abovesaid classification given in the DPR 203.

The use of the water paint obtained does not require the depollution of the working premises since the SOV value is within the allowed limits. Therefore only the emissions coming from the drying- and cooking-oven require the post-combustion.

In the same way as above described various paints were prepared having a various ratio PAI:PTFE varying from 10:90 and 90:10; excepting the case wherein the PAI:PTFE ratio was equal or higher than 80:20, 1% (by weight, calculated on the sum PAI+PTFE) of Triton X 100, commercial name used by Rohm & Haas for octylphenol condensed with 10 moles of ethylene oxide per mole, was added to the mixture.

All the paints obtained were tested for anti-adhesiveness according to the British Standard 7069.

The obtained results are reported in Table 1.

**Table 1**

| N. es. | PAI | PTFE | FILM ASPECT | ANTIADH.** |
|---|---|---|---|---|
| 1 | 70 | 30 | homog. mat | 3 |
| 2 | 10 | 90 | homog. bright | 1 |
| 3 | 20 | 80 | " " | 1 |
| 4 | 30 | 70 | " " | 1-2 |
| 5 | 40 | 60 | " " | 2 |
| 6 | 50 | 50 | " " | 2-3 |
| 7 | 60 | 40 | homog. semibright | 3 |
| 8* | 80 | 20 | homog. mat | 3-4 |
| 9* | 90 | 10 | " " | 4 |

| | | | | |
|---|---|---|---|---|
| NOTE: * = addition of 1% emulsifier | | | | |
| ** = anti-adhesiveness value - British Standard 7069 | | | | |

### Example 10

800 g of partially salified PAI solution as described in Example 1 were charged in a ball-mill (soapstone) with 200 g of carbon-black (Printex 85) and grinded for 100 hours at room temperature (25°C), in order to obtain a complete homogenisation of the mixture and to reduce the dimension of the particles under 8 µm.

50 g of the so obtained dispersion of carbon-black in PAI, were mixed with 611 g of the PAI solution obtained as described in Example 1, with 149 g of Algoflon D 60 (an aqueous dispersion of 60% PTFE and containing 3.5% of surface-active agents) and with 190 g of distilled water, under mild stirring at room temperature (25°C). An homogeneous dispersion of black water paint is obtained, having a dry content of 30.8% by weight and a weight ratio PAI:PTFE = 70:30.

The total volatile organic subtances (SOV) content of the obtained paint was 355, wherein 49.5 of class 1 and 305.5 of class 2, according to the above said classification given in DPR 203.

The use of the water paint obtained does not require the depollution of the working premises since the SOV value is within the allowed limits.

Therefore only the emissions coming from the drying- and cooking-oven require the post-combustion.

### Example 11

According to the method described in Example 10, 300 g of titanium dioxide were grinded with 700 g of partially salified PAI solution prepared according to Example 1.

600 g of the so obtained dispersion of titanium dioxide in PAI were mixed with 231 g of the PAI solution obtained as described in Example 1, with 149 g of Algoflon D 60 (an aqueous dispersion of 60% PTFE and containing 3.5% of surface-active agents)and with 20 g of distilled water, under mild stirring at room temperature (25°C). An homogeneous dispersion of white water paint is obtained, having a dry content of 47.8% by weight and a weight ratio PAI:PTFE = 70:30.

The total volatile organic subtances (SOV) content of the obtained paint was 355, wherein 49.5 of class 1 and 305.5 of class 2, according to the above said classification given in DPR 203.

The use of the water paint obtained does not require the depollution of the working premises since the SOV value is within the allowed limits. Therefore only the emissions coming from the drying- and cooking-oven require the post-combustion.

### Example 12

792 g of Rhodeftal 30% by weight in N-methylpyrrolidone were charged, under nitrogen atmosphere, in an autoclave equipped with stirrer and warming sleeve. The solution temperature was raised to 30°C and 57 g of trimethylamine (50% of the stoichiometric quantity necessary to neutralize the PAI) were added. After the addition of the amine the solution temperature was raised to 50°C and 44 g of polyethoxylated tridecylic alcohol (10 molecules of ethylene oxide per mole) were added. The mixture temperature was raised to 100°C and 107 g of distilled water were added in the autoclave. The temperature was maintained at 100°C for 6 hours and then cooled down to room temperature; the autoclave content, a clear solution of partially salified PAI, was discharged.

779 g of the so obtained PAI solution were mixed with 132 g of Algoflon D 60 (an aqueous dispersion of 60% PTFE containing 3.5% of surface-active agents) and 89 g of distilled water, under mild stirring at room temperature (25°C). An homogeneous dispersion of clear water paint having a dry content (PAI + PTFE) 26.4% by weight and a weight ratio PAI:PTFE of 70:30, was obtained.

The total value of organic volatile substance (SOV) of the obtained paint was 515, wherein 44 of class 1 and 471 of class 2, according to the abovesaid classification given in the DPR 203.

The use of the water paint obtained does not require the depollution of the working premises since the SOV value is within the allowed limits. Therefore only the emissions coming from the drying- and cooking-oven require the post-combustion.

### Examples 13-21 (comparative)

548 g of Rhesisterm 44% by weight in N-methylpyrrolidone were charged, under nitrogen atmosphere, in an autoclave equipped with stirrer and warming sleeve. The temperature was raised to 30°C and 86 g of dimethylethanolamine (stoichiometric quantity necessary to neutralize the PAI) were added. At the end of the addition of the amine the solution temperature was raised to 50°C and 258 g of cellosolve (ethylenglycol monomethylether) as viscosity reducer were added. The temperature of the mixture was raised to 100°C and 108 g of distilled water were added in the autoclave. The temperature was maintained at 100°C for 6 hours and then it was cooled down at room temperature and the autoclave content, a clear solution of totally salified PAI, was discharged.

813 g of the so obtained PAI solution were mixed with 140 g Algoflon D 60 (an aqueous dispersion of PTFE 60% containing 3.5% of surface-active agents) and with 47 g of deionised water under mild stirring at room temperature (25°C). An homogeneous dispersion of clear water paint having a dry content (PAI+PTFE) 28.0% by weight and a weight ratio PAI:PTFE = 70:30 was obtained.

The total organic volatile substance content (SOV) of the so obtained paint was 534.2 wherein 279.7 of class 1 and 254.5 of class 2 according to the above said DPR 203 classification.

The use of the so obtained water paint requires the depollution of the working premises since the SOV value of class 1 is above the allowed limits. The post-combustion of the emissions coming from the drying-and cooking-ovens is also necessary.

According to the above reported procedure various paints having various ratios PAI:PTFE varying from 10:90 to 90:10 were prepared. Since in all cases the obtained paints gave lumped films or in any case, even the most favourable, presented some lumps, the tests were repeated adding 1% - 15% by weight (calculated on the sum PAI+PTFE) of Trinitron X 100, denomination used by Rohm & Haas for octylphenol condensed with 10 moles of ethylene oxide per mole.

All the obtained paints were tested for the anti-adhesiveness according to the British Standard 7069.

The results are reported in Table 2.

**Table 2**

| N. es. | PAI | PTFE | % Emuls. | FILM ASPECT | ANTIADH.** |
|---|---|---|---|---|---|
| 13 | 70 | 30 | 15 | some lumps | --* |
| 14 | 10 | 90 | 1 | homog. bright | 1 |
| 15 | 20 | 80 | 3 | " " | 1 |
| 16 | 30 | 70 | 6 | " " | 1 |
| 17 | 40 | 60 | 8 | homog. mat | 3 |
| 18 | 50 | 50 | 12 | " " | 3 |
| 19 | 60 | 40 | 15 | " " | 3 |
| 20 | 80 | 20 | 15 | some lumps | --* |
| 21 | 90 | 10 | 15 | some lumps | --* |

| | | | | | |
|---|---|---|---|---|---|
| NOTE: * = value not determined because of the presence of lumps | | | | | |
| ** = antiadhesiveness value - British Standard 7069 | | | | | |

### Example 22

556 g of a partially salified PAI solution as described in example 1 were mixed with 444 g of Algoflon D 60 (an aqueous dispersion of PTFE 60% containing also 3.5% of surface-active agents), under mild stirring at room temperature (25°C). An homogeneous dispersion of clear water paint with a dry content (PAI+PTFE) 44.4% by weight and a weight ratio PAI:PTFE = 40:60.

The total value of organic volatile substance (SOV) of the obtained paint was 314.1 wherein 42.3 of class 1 and 271.8 of class 2 according to the above said classification given in the DPR 203.

The use of the water paint obtained does not require the depollution of the working premises since the SOV value is within the allowed limits.

Therefore only the emissions coming from the drying- and cooking-oven require the post-combustion.

### Example 23

49.5 g of a carbon-black dispersion in PAI prepared according to Example 10 were mixed with 511 g of the PAI solution obtained as described in Example 1, and with 439.5 g of Algoflon D 60 (an aqueous dispersion of PFTE 60% containing 3.5% surface-active agent), under mild stirring at room temperature (25°C). An homogeneous dispersion of black water paint having a dry content of 45% by weight and a weight ratio PAI:PFTE = 40:60 was thus obtained.

The total value of organic volatile substance (SOV) of the obtained paint was 311.3 wherein 41.8 of class 1 and 269.5 of class 2 according to the above said classification given in the DPR 203.

The use of the water paint obtained does not require the depollution of the working premises since the SOV value is within the allowed limits.

Therefore only the emissions coming from the drying- and cooking-oven require the post-combustion.

### Example 24

9 g of a black-carbon dispersion in PAI prepared according to Example 10 were mixed with 512 g of the PAI solution obtained according to Example 1, with 19 g of platelets mica, with 439.5 g of Algoflon D 60 (an aqueous dispersion of PTFE 60% containing 3.5% of surface-active agents) and with 46 g of deionized water, under mild stirring at room temperature (25°C).

An homogeneous dispersion of black-metallized water paint, having a dry content of 43.5% by weight and a weight ratio PAI:PTFE = 40:60 was thus obtained.

The total value of organic volatile substance (SOV) of the obtained paint was 293.5 wherein 39.5 of class 1 and 254 of class 2 according to the above said classification given in the DPR 203.

The use of the water paint obtained does not require the depollution of the working premises since the SOV value is within the allowed limits.

Therefore only the emissions coming from the drying- and cooking-oven require the post-combustion.

### Example 25

70 g of a black-carbon dispersion in PAI prepared according to Example 10 were mixed with 375 g of the PAI solution obtained according to Example 1, with 40 g of titanium dioxide suspension obtained according to the example 11, with 257 g of Algoflon D 60 (an aqueous dispersion of PTFE 60% containing 3.5% of surface-active agents), with 40 g of Collacral BASF, as thickening agent, and with 218 g of deionized water, under mild stirring at room temperature (25°C). An homogeneous dispersion of grey water paint, having a dry content of 36,5% by weight and a weight ratio PAI:PTFE = 50:50 was thus obtained (Product A).

The Product A was applied as a first layer to aluminum discs which at the ending of the painting process were transformed in pots by pressure moulding.

70 g of a black-carbon dispersion in PAI prepared according to Example 10 were mixed with 320 g of the PAI solution obtained according to Example 1, with 40 g of titanium dioxide suspension obtained according to the example 11, with 321 g of Algoflon D 60 (an aqueous dispersion of PTFE 60% containing 3.5% of surface-active agents), with 40 g of Collacral BASF, as thickening agent, and with 204 g of deionized water, under mild stirring at room temperature (25°C). An homogeneous dispersion of grey water paint, having a dry content of 49,5% by weight and a weight ratio PAI:PTFE = 40:60 was thus obtained (Product B).

The Product B was applied as second layer over aluminum discs which were previously treated with the Product A.

A Product C prepared as described in the EP-A-9410068 was applied as third layer over aluminum discs previously coated with a first layer of Product A and a second layer of Product B.

The application of any layer is followed by a warm drying process (temperature of the element at 50-70 °C, in order to evaporate the water present in the compositions. After the last application and the relevant drying process the discs are baked at a temperature of 400-430 °C, preferably of 410-420 °C.

Through this operation it is possible to obtain a solid elastic anti-adherent film tightly fixed to the metallic support and moulding proof.

## Claims

1. Process for obtaining water paints useful for the anti-adhesive coating of aluminium pots, constituted by aqueous dispersions of mixtures of polyamidoimmido resins (PAI) with PTFE, containing between 10% and 30% by w. of PAI, and in which the weight ratio PAI/PTFE is between 35/65 and 80/20, comprising the following process steps:
a) charging in a reactor under nitrogen atmosphere the PAI resin in solution in N-methylpyrrolidone at concentration between 25% and 45% by w. and adding at a temperature of the solution between 25° C and 35° C a tertiary aliphatic amine, in an amount comprised between 45% and 65% of the stoichiometric quantity necessary for the complete salification of the acid groups comprised in the PAI structure and which become free during the preparation process,
b) adding a non-ionic surface-active agent consisting of an aliphatic alcohol having 10-30 carbon atoms condensed with 10-20 mols of ethylene oxide, or of tridecylic acid condensed with 10 mols of ethylene oxide, in an amount comprised between 10% and 20% by w. calculated on the PAI and distilled water in amount of 40% ö 50% by w. on the PAI and increasing the temperature of the mixture to 50°C,
c) maintaining the reaction mixture at temperature comprised between 90° and 110°C for 4 ö 10 hours,
d) mixing the solution of partially salified PAI obtained in step c) with aqueous dispersion of PTFE in such amount to obtain a water paint in which the weight ratio PAI/PTFE is between 35/65 and 80/20.

2. Process according to claim 1 wherein in step d the PTFE dispersion is mixed with PAI in such amount to obtain a weight ratio PAI/PTFE comprised between 60/40 and 70/30.

3. Process according to claim 1 wherein the aliphatic tertiary amine added to the reaction mixture in step a) is chosen in the group consisting of: methyldiethylamine, triethylamine, dimethylethanolamine and diethylethanolamine.

## Revendications

1. Procédé de production de peintures à l'eau utiles pour le revêtement anti-adhésif de pots en aluminium, constituées par des dispersions aqueuses de mélanges de résines polyamideimides (PAI) et de PTFE, contenant entre 10% et 30% en poids de PAI, et dans lesquelles le rapport en poids PAI/PTFE est entre 35/65 et 80/20, comprenant les étapes de traitement suivantes :
a) chargement, dans un réacteur et sous atmosphère d'azote, de la résine PAI en solution dans la N-méthyl-pyrrolidone à une concentration comprise entre 25% et 45% en poids, et addition, à une température de solution entre 25°C et 35°C, d'une amine tertiaire aliphatique en une quantité comprise entre 45% et 65% de la quantité stoechiométrique nécessaire à la salification complète des groupes acides inclus dans la structure PAI qui deviennent libres au cours du procédé de préparation ;
b) addition d'un agent tensioactif non ionique consistant en un alcool aliphatique ayant de 10 à 30 atomes de carbone condensé avec 10-20 moles d'oxyde d'éthylène, ou d'acide tridécylique condensé avec 10 moles d'oxyde d'éthylène, en une quantité comprise entre 10% et 20% en poids calculée par rapport au PAI et de l'eau distillée en une quantité de 40% à 50% en poids par rapport au PAI, et augmentation de la température du mélange jusqu'à 50°C ;
c) maintien du mélange réactionnel à une température comprise entre 90°C et 110°C pendant 4 à 10 heures ;
d) mélange de la solution du PAI partiellement salifié obtenu dans l'étape c) avec une dispersion aqueuse de PTFE en une quantité telle que l'on obtient une peinture à l'eau dans laquelle le rapport en poids PAI/PTFE est entre 35/65 et 80/20.

2. Procédé selon la revendication 1, dans lequel la dispersion de PTFE est mélangée avec le PAI dans l'étape d) en une quantité telle que l'on obtient un rapport en poids PAI/PTFE compris entre 60/40 et 70/30.

3. Procédé selon la revendication 1, dans lequel l'amine tertiaire aliphatique ajoutée au mélange réactionnel dans l'étape a) est choisie dans le groupe constitué par la méthyldiéthylamine, la triéthylamine, la diméthyléthanolamine et la diéthyléthanolamine.

## Patentansprüche

1. Verfahren zum Erhalt von Wasserfarben, die zur Antihaftbeschichtung von Aluminiumtöpfen nützlich sind, gebildet durch wässrige Dispersionen von Polyamidoimidoharz (PAI)-Mischungen mit PTFE, enthaltend zwischen 10 und 30 Gew.% PAI, bei dem das Gewichtsverhältnis von PAI/PTFE zwischen 35:65 und 80:20 liegt, umfassend die folgenden Verfahrensschritte:
(a) Beladen eines Reaktors unter Stickstoffatmosphäre mit einer Lösung von PAI-Harz in N-Methylpyrrolidon mit einer Konzentration zwischen 25 und 45 Gew.% und Zugabe einer tertiären aliphatischen Aminlösung bei einer Temperatur zwischen 25 und 35°C in einer Menge, umfassend zwischen 25 und 65 % der stöchiometrischen Menge, notwendig zur kompletten Versalzung der Säuregruppen enthalten in der PAI-Struktur, die während des Herstellungsverfahrens frei werden,
(b) Zugabe eines nicht-ionischen Tensids, bestehend aus einem aliphatischen Alkohol mit 10 bis 30 Kohlenstoffatomen, kondensiert mit 10 bis 20 mol Ethylenoxid, oder von Tridecansäure, kondensiert mit 10 mol Ethylenoxid in einer Menge zwischen 10 und 20 Gew.% bezogen auf das PAI, und destilliertem Wasser in einer Menge von 40 bis 50 Gew.% bezogen auf PAI, und erhöhen der Temperatur der Mischung auf 50°C,
(c) Halten der Reaktionsmischung auf einer Temperatur zwischen 90 und 110°C für 4 bis 10 Stunden,
(d) Mischen der Lösung des in Schritt (c) erhaltenen, teilweise versalzten PAI mit einer wässrigen Dispersion von PTFE in einer Menge, bei der das Gewichtsverhältnis PAI/PTFE zwischen 35:65 und 80:20 ist, um eine Wasserfarbe zu erhalten.

2. Verfahren gemäss Anspruch 1, wobei in Schritt (d) die PTFE-Dispersion mit PAI in einer solchen Menge vermischt wird, um ein Gewichtsverhältnis von PAI/PTFE zwischen 60:40 und 70:30 zu erhalten.

3. Verfahren gemäss Anspruch 1, wobei das aliphatische tertiäre Amin, das zu der Reaktionsmischung in Schritt (a) zugegeben wird, ausgewählt ist aus der Gruppe, bestehend aus Methyldiethylamin, Triethylamin, Dimethylethanolamin und Diethylethanolamin.
